# EUROPEAN PATENT SPECIFICATION

(11) **EP 2 033 103 B1**
(45) Date of publication and mention of the grant of the patent: **22.12.2010**
(21) Application number: 07734801.9
(22) Date of filing: 06.06.2007
(51) Int. Cl.: G06F 13/38

(54) **INTERFACE CARD FOR PROCESSING DEVICE**
SCHNITTSTELLENKARTE FÜR EINE VERARBEITUNGSEINRICHTUNG
CARTE D'INTERFACE POUR DISPOSITIF DE TRAITEMENT

(30) Priority: 06.06.2006 IT PN20060045; 06.06.2006 IT PN20060023 U; 12.04.2007 IT PN20070012 U
(43) Date of publication of application: 11.03.2009
(73) Proprietor: Onda Communication S.P.A., 33080 Roveredo in Piano (PN) (IT)
(72) Inventor: PARONUZZI, Federico, I-33170 Pordenone (IT); PLACER, Mauro, I-34136 Trieste (IT); LORENZINI, Luca, I-33047 Remanzacco (UD) (IT)
(74) Representative: Camolese, Marco
(86) International application number: PCT/IB2007/001526
(87) International publication number: WO 2007/141644

(56) References cited:
- WO-A-03/088671
- US-A1- 2003 028 876

## Description

### Field of invention

The present invention relates to the field of telecommunications and electronic appliances in general.

More specifically, the present invention relates to an interface card adapted to be connected to a processing device, in particular a personal computer or laptop, for exchanging data according to a data protocol and/or receiving digital television audio/video signals.

### Description of the background art

A modem is a device allowing electronic systems, e.g. computers, to communicate with each other by using a common transmission channel, e.g. telephone line, electric line, radio channel, mobile telephone network, etc. A modem modulates and de-modulates the signals sent over the common transmission channel based on the type of information being transferred.

Recent technologic developments have allowed to use increasingly fast and reliable transmission networks, technologies and protocols. In fact, old 2G technology networks using, for example, the GSM and GPRS transmission protocols have firstly been replaced by 2.5G technology networks using, for example, the EDGE protocol, and then by the latest 3G technology networks using, for example, the UMTS protocol.

Newer transmission protocols provide faster speeds, thus allowing to send and receive larger amounts of data.

Modems are already available which use the HSDPA protocol in 3.5G technology, while modems using the HSUPA protocol are currently being developed.

The acronym HSDPA stands for "High Speed Downlink Packet Access", whereas the acronym HSUPA stands for "High-Speed Uplink Packet Access". The HSDPA protocol is a combination of several techniques, all of which contribute to increase the channel downlink capacity.

These are technologies which allow to increase the bandwidth of current mobile communication networks up to a maximum speed of 14 Mbit/s. In the near future the HSOPA technology will also become available, the acronym HSOPA standing for "High-Speed OFDM Packet Access", providing even higher connection speeds.

In short, the HSDPA transmission protocol can be considered to be an evolution, in terms of speed, of the UMTS transmission protocol, just like the EDGE transmission protocol was an evolution of the GSM and GPRS transmission protocols.

In addition to existing videocall services, this new performance level will also allow to obtain navigation speeds comparable with those currently only available through ADSL type fixed connections, and therefore higher than the theoretical 2 Mbit/s of UMTS, which is actually only 384 Kbit/s.

Another recently developed technology is the one described in the DVB-H (Digital Video Broadcasting - Handheld) standard, i.e. a radio broadcast technology that allows to receive video signals and to display digital television programs and other multimedia contents on a portable terminal or videophone.

Developed by the Digital Video Broadcasting Project, the DVB-H standard represents a variant of the DVB-T standard, which is the European standard for digital terrestrial TV adopted also in Italy.

The European Telecommunications Standards Institute (ETSI) has recently approved the DVB-H standard as the European standard for mobile TV services.

As a matter of fact, DVB-H has been specially designed for receiving audio/video signals on portable terminals, e.g. mobile telephones and PDAs, powered by batteries having limited capacity.

Thanks to the improvement introduced by the DVB-H standard, mobile devices can now be powered directly by streams coming from DVB-T networks. In fact, since they can be defined as specific DVB-H type contents, DVB-T transmissions can coexist on the same DVB-H type transport stream without adversely affecting either service.

DVB-H is de facto an improvement over DVB-T, and offers better performance in both new and existing applications. DVB-T was developed for distributing MPEG-2 transport streams, but it may actually carry any type of data as long as the specifications are complied with.

The extension of DVB-H to DVB-T represents a remarkable progress, contributing to the convergence of telecommunications, broadcasts and the Internet.

Besides reducing the energy consumption of receivers, providing "transparent" cell changes, improving immunity to impulsive noise and improving reception in areas only marginally covered by digital TV signals, the DVB-H standard also allows to manufacture portable receivers which are less expensive than those currently required for ISDB-T or multimedia DAB.

The DVB-H standard operates by combining the digital video standards with the Internet Protocol in order to subdivide the contents into data packets to be transferred to the mobile telephone, thus making them "readable" by the user. Data weight is thus decreased, and it is possible to transfer data while maintaining a high video quality.

In addition, the use of the IP protocol allows to transmit simultaneously on the same channel both video packets (DVB stream) and data packets which can be used by applications run on the receiving terminal (IP Datacast). Such applications typically include news distribution, financial information, multimedia contents, file transfer, and high-speed Internet access, where service interactivity is ensured by using the return channel of the mobile telephone network.

DVB-T can operate in two transmission modes by changing the number of carriers from 1705 (also called "2k" mode) to 6817 (also called "8k" mode). The 8k mode can be used very successfully in mobile applications, but this actually requires the use of expensive receivers having "diversity" characteristics for high speeds and high transmission speeds. The 2k mode, on the other hand, can only be used up to 400 km/h without "diversity". Although DVB-T has already been successfully used in mobile applications, it still requires the availability of an adequate power source, as is generally the case in a car or a laptop computer.

An intermediate mode called 4k has been implemented for DVB-H which utilizes 3409 active carriers and offers a new intermediate dimension within the DVB-T specifications. Moreover, DVB-H solves the consumption problem by using a technique called "Time Slicing".

Unlike DVB-T, where data transmission is essentially continuous, according to DVB-H data is transmitted in sequences. By using data control signals for synchronization, DVB-H receivers only turn themselves on to receive and decode DVB-H sequences, thus providing huge energy savings and making batteries last longer.

The Time Slicing technique also helps the handover process, i.e. transfer from a cell to another, in that it allows the devices to receive and decode signals from both the old and the new cells, thereby providing break-free reception during cell and frequency changes. DVB-T with DVB-H can be used on 6, 7 or 8MHz transmission channels, but specifications are also available for 5MHz channels in view of using this standard in non-broadcast applications as well.

At present, both of the above-described technologies exist in separate devices - typically mobile telephones - and have not been implemented together yet.

US 2003/0028876 describes a personal computer comprising an image processing board able to receive digital television signals through a set-top box and an antenna.

In the near future, 3G mobile telephones will be launched which will be able to receive and decode DVB-H type signals. Although they allow to use both 3G and DVB-H technologies, these are nonetheless separate devices which do not allow, for instance, to use a laptop computer for receiving digital TV programs, unless presumably a suitable cable is used, or for manipulating said programs in order to: display them on the display of a laptop computer, which is definitely bigger than that of the mobile telephone; store video streams; transfer both video and data simultaneously for M2M (Machine-to-Machine) applications.

Therefore, these are not devices which have been created ad hoc for use on laptop computers, but rather telephones adapted by using other attachments in order to provide their users with high-speed connections and access to digital television programs.

### Object and brief description of the invention

It is an object of the present invention to provide an interface card adapted to be connected to a communication port of a processing device and comprising two technologies, one providing mobile digital television and access to data streams distributed therewith, and the other one for high-speed Internet connection.

It is a further object of the present invention to provide an interface card adapted to be connected to a communication port of a processing device, which then becomes flexible and universal to use.

It is a further object of the present invention to provide an interface card adapted to be connected to a communication port of a processing device, wherein the energy required for the operation of the card itself is optimized.

It is a further object of the present invention to provide an interface card adapted to be connected to a communication port of a processing device, thus providing conditioned access to the programs of mobile digital television.

It is a further object of the present invention to provide an interface card adapted to be connected to a communication port of a processing device, so construed that the antennas adapted to pick up the signals sent through both transmission technologies, i.e. one for mobile digital television and access to data streams distributed therewith, and the other one for high-speed Internet connection, do not interfere with each other.

In accordance with the present invention, these objects are achieved by means of an interface card incorporating the features set out in the appended claims, which are intended as an integral part of the technical teaching of the invention.

### Brief description of the drawings

The invention will now be described by way of non-limiting example with reference to the annexed drawings, wherein:
- Fig. 1 shows a diagram of a first embodiment of an interface card according to the invention, adapted to be connected to a processing device, in particular a laptop computer;
- Figs. 2 and 3 show details of the hardware components of the interface card of Fig. 1;
- Fig. 4 shows a diagram of a second embodiment of an interface card according to the invention, adapted to be connected to a processing device, in particular a laptop computer;
- Fig. 5 shows a physical structure of the interface card of Fig. 4;
- Fig. 6 shows a detail of the connections of the interface card of Fig. 4;
- Figs. 7a,7b show a particular connector of the interface card of Fig. 4;
- Fig. 8 shows a container of the interface card of Fig. 4;

### Detailed description of embodiment examples of the invention

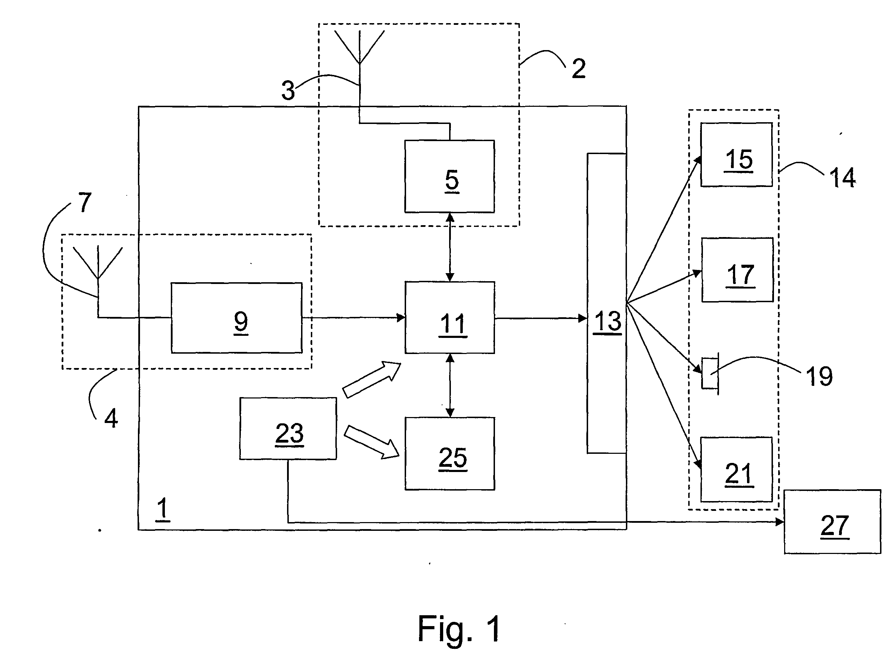

Fig. 1 shows the architecture of a first embodiment of an interface card 1 according to the invention.

The card 1 comprises means 2 for receiving and transmitting data according to a 2G or higher data protocol, as well as means 4 for receiving a digital television signal.

In a preferred embodiment, the means 2 for receiving and transmitting data according to a 2G or higher data protocol of the card 1 comprise a first antenna 3 connected to a transceiver module 5 which is capable of receiving signals according to a 2G or higher data protocol, e.g. GSM and/or GPRS and/or EDGE and/or UMTS and/or HSDPA, and the means 4 for receiving a digital television signal comprise a second antenna 7 for receiving DVB-H type digital television signals, connected to a receiver 9 capable of receiving DVB-H type digital television signals.

The means 2 for receiving and transmitting data according to a 2G or higher data protocol and the means 4 for receiving a digital television signal are connected to a 2G and/or higher/DVBH common baseband module 11 comprising a digital signal processor DSP, a processing unit CPU and a memory.

The common baseband module 11 is also connected to a PCMCIA interface module 13, preferably type II, which can be connected through the standard pins of the PCMCIA slot of the interface module 13 to hardware peripherals of a processing device 14, in particular a notebook or laptop computer. Such peripherals may comprise a keyboard 15, a display 17, a microphone 19 and loudspeakers 21 for reproducing audio signals.

A firmware 23 executed in the common baseband module 11 and in a multimedia processor 25 used for implementing signal decoding algorithms supports "AT" commands, i.e. the commands used for controlling the transceiver module 5, and manages the various hardware components of the card 1 as a whole.

Through a suitable user interface software 27 interacting with the firmware 23, it is possible to handle several functions of the card 1, i.e. gain access to WebTV (IpTV), DVBH TV, Internet via the transceiver module 5 for GSM and/or GPRS and/or EDGE and/or UMTS and/or HSDPA type signals, electronic mail, and so on.

Advantageously, the transceiver modules 5 with HSDPA Release 5 also include the Hybrid ARQ (HARQ), "Adaptive Modulation", "Fast Scheduling" and "Fast Retransmission" functions, while the later Release 6 modules widen the capabilities of said functions even further by introducing the "Multiple Input Multiple Output" (MIMO) technique.

These features replace the basic UMTS features, i.e. "Variable Spreading Factor" and "Fast Power Control".

"Adaptive Modulation" adapts the modulation and the encoding pattern according to the conditions of the channels, so that the best transmission speed is attained for each user device.

With "Fast Retransmissions", when a data transmission error occurs and data must therefore be re-transmitted, according to the UMTS standard the system must wait about 100 ms or more for the Radio Network Controller, i.e. the fundamental component for UTMS network access, to intervene and react. By moving this functionality to the base station, the reaction time is reduced by one order of magnitude.

With the "Fast Scheduling" used by HSDPA, the responsibility of the "Radio Network Controller" is thus given to the base station, thus reducing the reaction time significantly when operating conditions change.

Finally, by re-combining the bits transmitted the first time with those re-sent the second time in a specific manner, the "Hybrid ARQ" (HARQ) function ensures higher decoding and gain efficiency.

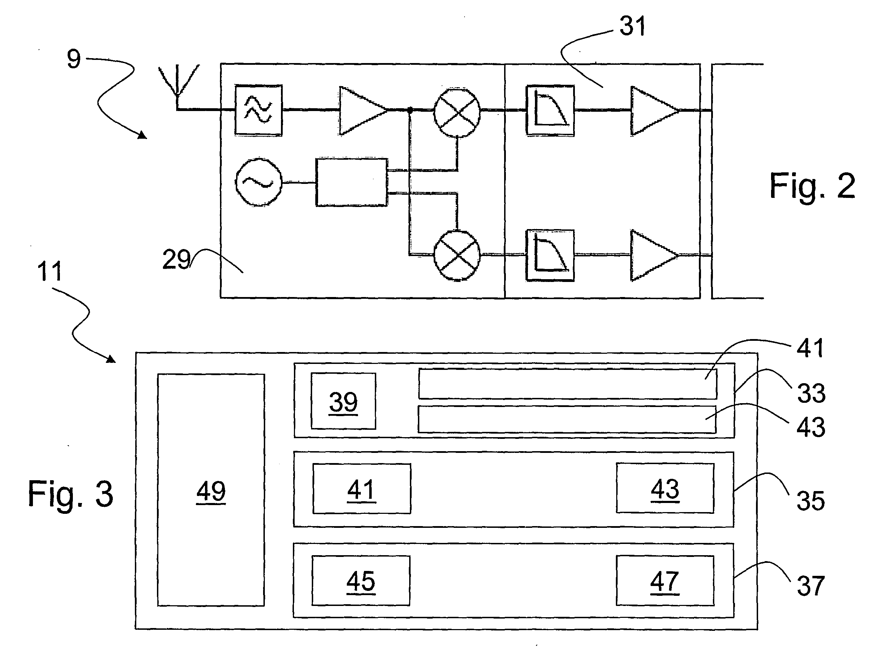

Fig. 2 shows a detail of the receiver 9, which comprises a tuner 29 and a channel decoder 31.

Fig. 3 shows a preferred embodiment of the common baseband module 11, which comprises a 2.5G GSM/GPRS/EDGE transceiver module 37 and/or a 3G transceiver module 35 and/or a 3.5G HSDPA transceiver module 33.

A DVB-H receiver 49 may be integrated physically within the common baseband module 11, or else it may be connected externally thereto as shown in Fig 1, thus integrating the DVB-H service on HSDPA band.

Preferably, an HSDPA type transceiver module 33 comprises in turn a 16QAM receiver 39, an HS-DSCH (High Speed-Downlink Shared Channel) module 41 and an HS-SCCH (High Speed-Shared Common Channel) module 43.

Also, a 3G transceiver module 35 preferably comprises a rake receiver 41 and a Bit Rate Processor 43 capable of estimating the instantaneous communication speed. Furthermore, the 2.5G GSM/GPRS/EDGE transceiver module 37 preferably comprises a receiver 45 and an additional Bit Rate Processor 47.

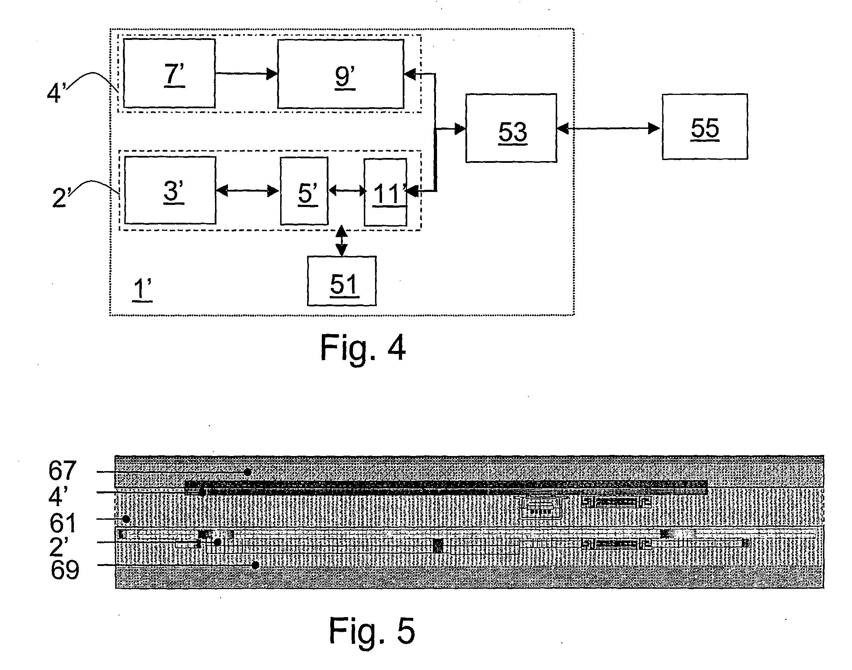

A second embodiment of an interface card 1' according to the invention will now be described with reference to Fig. 4, which comprises means 2' for receiving and transmitting data according to a 2G or higher data protocol and means 4' for receiving a digital television signal.

In a preferred embodiment, the means 2' for receiving and transmitting data according to a 2G or higher data protocol of the card 1' comprise a first antenna 3' connected to a transceiver module 5' which is capable of receiving 2G and/or higher signals, such as, for example, GSM and/or GPRS and/or EDGE and/or UMTS and/or HSDPA, and the means 4' for receiving a digital television signal comprise a second antenna 7' for receiving DVB-H type audio/video signals connected to a receiver 9' capable of receiving DVB-H type audio/video signals.

The means 2' for receiving and transmitting data according to a 2G or higher data protocol also comprise a common baseband module 11' similar to the baseband module 11 of the first embodiment.

The interface card 1' further comprises a "USB Hub" type interface module 53 housed in the means 4' for receiving a digital television signal of the card 1', the latter being designed specifically for this purpose.

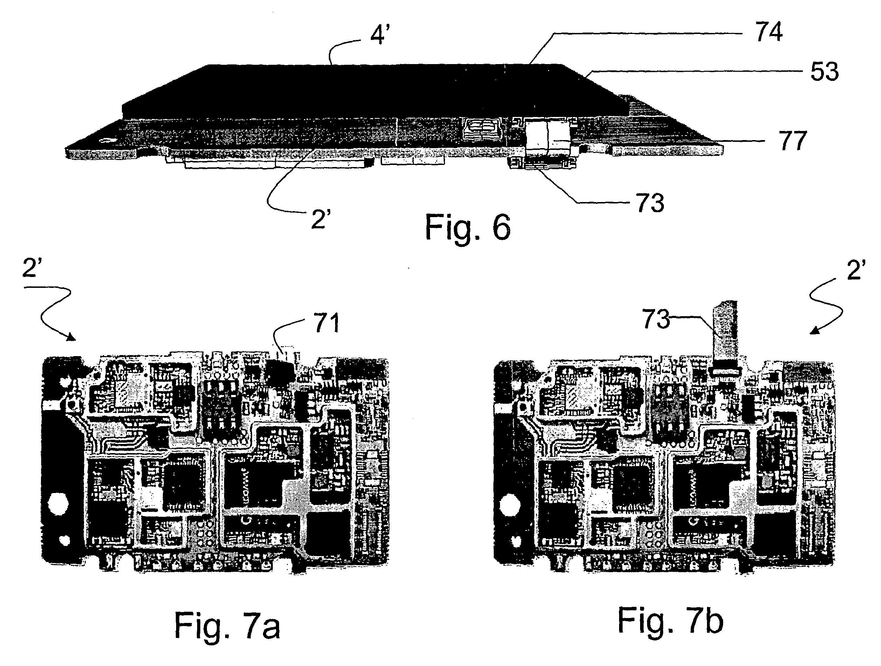

The USB Hub interface module 53 comprises a USB port 74, visible in Fig. 6, which can be connected to a corresponding USB port of a processing device 55, in particular a laptop computer.

The internal USB Hub interface module 53 allows to provide a single interface toward the processing device 55. Said interface is used for routing information and sharing data pertaining to a SIM/USIM module 51.

The SIM/USIM module 51 is housed in a housing of the means 4' for receiving and transmitting data according to a 2G or higher data protocol. The same SIM/USIM module 51 is recognized by the means 4' for receiving a digital television signal through the internal USB port 74 of the card 1' itself. Thanks to the SIM/USIM module 51, the user of the card 1' can advantageously decode DVB-H multimedia contents encoded according to a conditioned access pattern.

The USB port 74 also carries the energy required for supplying the means 2' for receiving and transmitting data according to a 2G or higher data protocol and the means 4' for receiving a digital television signal which constitute the card 1' according to the invention.

Fig. 5 shows the physical integration between the means 4' for receiving a digital television signal and the means 2' for receiving and transmitting data according to a 2G or higher data protocol, as well as the overlapping of said means 4',2. It is essential that a technical solution is adopted for keeping an appropriate distance between the means 4' and the means 2' in order to avoid mutual interference between the antennas.

In particular, the card 1' has a central structure 61 which separates the means 4' for receiving a digital television signal from the means 2' for receiving and transmitting data according to a 2G or higher data protocol, said means 4' and 2' being arranged on opposite sides with respect to a central structure 61.

There are also two covers, i.e. a top cover 67 and a bottom cover 69, for making the card 1' compact and suitable for protecting the internal components of the means 4',2'.

Fig. 6 shows how the means 4' for receiving a digital television signal and the means 2' for receiving and transmitting data according to a 2G or higher data protocols are connected to each other.

As shown in Figs. 7a and 7b, the means 2' for receiving and transmitting data according to a 2G or higher data protocol comprise a connector 71 (Fig. 7a) which is suitably modified (Fig. 7b) in order to obtain a modified connector 73.

Referring back to Fig. 6, the modified connector 73 of the means 2' for receiving and transmitting data according to a 2G or higher data protocol is connected through a flexible wiring 77, e.g. FPC (flexible printed circuit) type, to the connector of the 2G or higher transceiver module 5', said connector being compatible with the pin layout of a normal USB connector which would otherwise be mounted to the same 2G or higher transceiver module 5'.

The connection between the means 4' for receiving a digital television signal and the means 2' for receiving and transmitting data according to a 2G or higher data protocol therefore allows to obtain a connection of the 2G or higher transceiver module 5' in compliance with the pin layout of a standard USB connector.

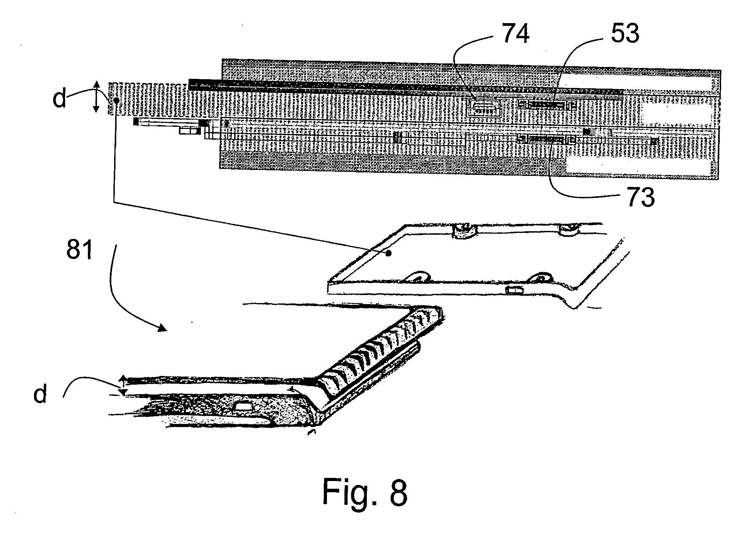

Fig. 8 shows how a container 8 is closed, said container being universal in that it can be adapted to different cards 1' while allowing to meet distance requirements. In particular, the container 81 allows to keep a distance of at least 4 mm between the means 4' for receiving a digital television signal and the means 2' for receiving and transmitting data according to a 2G or higher data protocol, so that the positioning of the antennas 3',7' is optimized, in particular in order to avoid altering the transmission and/or reception characteristics of the antenna 3' of the 2G or higher transceiver module 5' and disturbing the antenna 7'.

Further variations of the technical solutions and products described herein are possible without significantly changing the logic of integration of these two communication technologies.

For example, the use of a SIM/USIM module has been described in detail for the card 1' with a USB interface module, but it is also applicable to the card 1 with a PCMCIA interface module.

The advantages provided by the card according to the invention are apparent from the above detailed description.

The card according to the invention allows to use 2G and/or higher technologies together with the DVB-H technology through a standard connection, in particular PCMCIA or USB type, thus turning the processing device to which it is connected into a multimedia tool with Internet access and, at the same time, with access to mobile digital television and to data transmitted with the stream of mobile digital television.

It is clearly advantageous to have access to both technologies by means of a single universal and flexible device through a USB or PCMCIA connection, these types of connection offering the utmost universality and flexibility.

## Claims

1. Interface card (1;1') comprising an interface module (13;53) adapted to be connected to an electronic device (14;55), in particular a laptop computer or a processing device, comprising means (4,4') for receiving a digital television signal, **characterized by** further comprising means (2;2') for receiving and transmitting data according to a 2G or higher data protocol, wherein both said means (4;4') for receiving a digital television signal and said means (2;2') for receiving and transmitting data are connected to a common baseband module (11;11').

2. Interface card (1;1') according to claim 1, **characterised in that** said common baseband module (11;11') is of the 2G/DVBH type or higher.

3. Interface card (1;1') according to claim 1, **characterised in that** said common baseband module (11;11') comprises at least a digital signal processor, a processing unit and a memory.

4. Interface card (1;1') according to claim 1, **characterized in that** said means (4;4') for receiving a digital television signal comprise an antenna (7;7') and a receiver (9;9') adapted to receive DVB-H type signals.

5. Interface card (1,1') according to claim 4, **characterized in that** said receiver (49) is integrated into said common baseband module (11).

6. Interface card (1,1') according to claim 1, **characterized in that** said means (2;2') for receiving and transmitting data according to a 2G or higher data protocol comprise an antenna (3;3') and a transceiver module (5,5') adapted to transmit and/or receive data according to a 2G or higher data protocol.

7. Interface card (1,1') according to claim 6, **characterized in that** said transceiver module (5,5') is adapted to transmit and/or receive data according to a 2G transmission protocol, in particular GSM and/or GPRS type, and/or according to a 2.5G transmission protocol, in particular EDGE type, and/or according to a 3G transmission protocol, in particular UMTS type, and/or according to a 3.5G transmission protocol, in particular HSDPA and/or HSOPA type.

8. Interface card (1,1') according to claim 1, **characterized by** comprising a housing for a SIM/USIM module (51) adapted to cooperate with said means (4') for receiving a digital television signal so as to decode multimedia contents encoded according to a conditioned access pattern.

9. Interface card (1,1') according to claim 1, **characterized in that** said interface module (13;53) is a PCMCIA (Personal Computer Memory Card International Association) module, in particular type II, comprising a PCMCIA connector adapted to be connected to a corresponding connector of said electronic device (14;55).

10. Interface card (1,1') according to claim 1, **characterized in that** said interface module (13;53) is a USB type module comprising a USB connector (74) adapted to be connected to a corresponding connector of said electronic device (55).

11. Interface card (1') according to claim 10, **characterized in that** said means (4') for receiving a digital television signal and said means (2') for receiving and transmitting data according to a 2G or higher data protocol are connected to each other through an FPC type connector.

12. Interface card (1') according to claims 4 and 6, **characterized in that** said antennas (3',7') are arranged at such a distance (d) as to avoid mutual interference.

13. Interface card (1') according to claim 12, **characterized in that** said distance (d) is at least 4 mm.

14. Interface card (1') according to claim 1; **characterized in that** said means (4') for receiving a digital television signal and said means (2') for receiving and transmitting data according to a 2G or higher data protocol are separated by a central structure (61) and are protected by a top cover (67) and a bottom cover (69).

## Patentansprüche

1. Schnittstellenkarte (1;1'), mit einem Schnittstellenmodul (13;53), eingerichtet zum Verbinden mit einer elektronischen Vorrichtung (14;55), insbesondere einem Laptop-Computer oder einer Verarbeitungsvorrichtung, mit
Mitteln (4,4') zum Empfangen eines digitalen Fernsehsignals, **gekennzeichnet durch** Mittel (2;2') zum Empfangen und Senden von Daten gemäß einem 2G oder einem höheren Datenprotokoll, wobei die Mittel (4;4') zum Empfangen eines digitalen Fernsehsignals und die Mittel (2;2') zum Empfangen und Senden von Daten mit einem gemeinsamen Basisbandmodul (11;11') verbunden sind.

2. Schnittstellenkarte (1;1') nach Anspruch 1, **dadurch gekennzeichnet, dass** das gemeinsame Basisbandmodul (11;11') von dem 2G/DVBH-Typ oder höher ist.

3. Schnittstellenkarte (1;1') nach Anspruch 1, **dadurch gekennzeichnet, dass** das gemeinsame Basisbandmodul (11;11') zumindest einen digitalen Signalprozessor, eine Verarbeitungseinheit und einen Speicher aufweist.

4. Schnittstellenkarte (1;1') nach Anspruch 1, **dadurch gekennzeichnet, dass** die Mittel (4;4') zum Empfangen eines digitalen Fernsehsignals eine Antenne (7;7') und einen Empfänger (9;9'), eingerichtet zum Empfangen von DVB-H-Typ Signalen, aufweisen.

5. Schnittstellenkarte (1;1') nach Anspruch 4, **dadurch gekennzeichnet, dass** der Empfänger (49) in dem gemeinsamen Basisbandmodul (11) integriert ist.

6. Schnittstellenkarte (1;1') nach Anspruch 1, **dadurch gekennzeichnet, dass** die Mittel (2;2') zum Empfangen und Senden von Daten gemäß einem 2G oder einem höheren Datenprotokoll eine Antenne (3;3') und ein Transceivermodul (5,5') eingerichtet zum Senden und/oder Empfangen von Daten gemäß einem 2G oder einem höheren Datenprotokoll aufweisen.

7. Schnittstellenkarte (1,1') nach Anspruch 6, **dadurch gekennzeichnet, dass** das Transceivermodul (5,5') eingerichtet ist zum Senden und/oder Empfangen von Daten gemäß einem 2G Übertragungsprotokoll, insbesondere GSM und/oder GPRS-Typ, und/oder gemäß einem 2.5G Übertragungsprotokoll, insbesondere EDGE-Typ, und/oder gemäß einem 3G Übertragungsprotokoll, insbesondere UMTS-Typ, und/oder gemäß einem 3.5G Übertragungsprotokoll, insbesondere HSDPA und/oder HSOPA-Typ.

8. Schnittstellenkarte (1,1') nach Anspruch 1, **gekennzeichnet durch** ein Gehäuse für ein SIM/USIM Modul (51) eingerichtet zum Zusammenarbeiten mit dem Mittel (4') zum Empfangen eines digitalen Fernsehsignals, um so gemäß einem konditionierten Zugangsmuster verschlüsselte Multimediainhalte zu entschlüsseln.

9. Schnittstellenkarte (1,1') nach Anspruch 1, **dadurch gekennzeichnet, dass** das Schnittstellenmodul (13;53) ein PCMCIA (Personal Computer-Speicherkarten-Internationale Vereinigung) Modul, insbesondere Typ II, mit einem PCMCIA-Stecker eingerichtet zum Verbinden mit einem entsprechenden Stecker des elektronischen Gerätes (14;55) darstellt.

10. Schnittstellenkarte (1,1') nach Anspruch 1, **dadurch gekennzeichnet, dass** das Schnittstellenmodul (13;53) ein USB-Typ Modul mit einem USB-Stecker (74) eingerichtet zum Verbinden mit einem entsprechenden Stecker des elektronischen Gerätes (55) darstellt.

11. Schnittstellenkarte (1') nach Anspruch 10, **dadurch gekennzeichnet, dass** das Mittel (4') zum Empfangen eines digitalen Fernsehsignals und das Mittel (2') zum Empfangen und Senden von Daten gemäß einem 2G oder einem höheren Datenprotokoll miteinander über einen FPC-Typ Stecker verbunden sind.

12. Schnittstellenkarte (1') nach Anspruch 4 und 6, **dadurch gekennzeichnet, dass** die Antennen (3', 7') in einem derartigen Abstand (d) angeordnet sind, dass eine gegenseitige Interferenz vermieden wird.

13. Schnittstellenkarte (1') nach Anspruch 12, **dadurch gekennzeichnet, dass** der Abstand (d) mindestens 4 mm beträgt.

14. Schnittstellenkarte (1') nach Anspruch 1, **dadurch gekennzeichnet, dass** das Mittel (4') zum Empfangen eines digitalen Fernsehsignals und das Mittel (2') zum Empfangen und Senden von Daten gemäß einem 2G oder einem höheren Datenprotokoll durch eine Zentralstruktur (61) getrennt und durch eine obere Abdeckung (67) und eine untere Abdeckung (69) geschützt sind.

## Revendications

1. Carte d'interface (1 ; 1') comprenant un module interface (13 ; 53) adapté pour être connecté à un dispositif électronique (14 ; 55), en particulier un ordinateur portable ou un dispositif de traitement, comprenant un moyen (4, 4') permettant de recevoir un signal de télévision numérique, **caractérisée par** le fait de comprendre en outre un moyen (2 ; 2') permettant de recevoir et de transmettre des données selon un protocole de données 2G ou d'un type supérieur, carte dans laquelle ledit moyen (4 ; 4') permettant de recevoir un signal de télévision numérique et ledit moyen (2 ; 2') permettant de recevoir et de transmettre des données sont tous deux connectés à un module (11 ; 11') à bande de base commune.

2. Carte d'interface (1 ; 1') selon la revendication 1, **caractérisée en ce que** ledit module (11 ; 11') à bande de base commune est du type 2G/DVBH ou d'un type supérieur.

3. Carte d'interface (1 ; 1') selon la revendication 1, **caractérisée en ce que** ledit module (11 ; 11') à bande de base commune comprend au moins un processeur de signaux numériques, une unité de traitement et une mémoire.

4. Carte d'interface (1 ; 1') selon la revendication 1, **caractérisée en ce que** ledit moyen (4 ; 4') permettant de recevoir un signal de télévision numérique comprend une antenne (7 ; 7') et un récepteur (9 ; 9') adapté pour recevoir des signaux du type DVB-H.

5. Carte d'interface (1 ; 1') selon la revendication 4, **caractérisée en ce que** ledit récepteur (49) est intégré audit module (11) à bande de base commune.

6. Carte d'interface (1 ; 1') selon la revendication 1, **caractérisée en ce que** ledit moyen (2 ; 2') permettant de recevoir et de transmettre des données selon un protocole de données 2G ou de type supérieur comprend une antenne (3 ; 3') et un module émetteur/récepteur (5 ; 5') adapté pour transmettre et/ou recevoir des données selon un protocole de données 2G ou de type supérieur.

7. Carte d'interface (1 ; 1') selon la revendication 6, **caractérisée en ce que** ledit module émetteur/récepteur (5 ; 5') est adapté pour transmettre et/ou recevoir des données selon un protocole de transmission 2G, en particulier de type GSM et/ou GPRS et/ou selon un protocole de transmission 2.5G, en particulier de type EDGE, et/ou selon un protocole de transmission 3G, en particulier de type UMTS, et/ou selon un protocole de transmission 3.5G, en particulier de type HSDPA et/ou HSOPA.

8. Carte d'interface (1 ; 1') selon la revendication 1, **caractérisée par** le fait de comporter un boîtier pour un module SIM/USIM (51) adapté pour coopérer avec ledit moyen (4') pour recevoir un signal de télévision numérique, de façon à décoder des contenus multimédia codés selon un mode d'accès soumis à conditions.

9. Carte d'interface (1 ; 1') selon la revendication 1, **caractérisée en ce que** ledit module d'interface (13 ; 53) est un module PCMCIA (Association Internationale de Carte Mémoire d'Ordinateur Personnel), en particulier du type II, comprenant un connecteur PCMCIA adapté pour être connecté à un connecteur correspondant dudit dispositif électronique (14 ; 55).

10. Carte d'interface (1 ; 1') selon la revendication 1, **caractérisée en ce que** ledit module d'interface (13 ; 53) est un module du type USB comprenant un connecteur USB (74) adapté pour être connecté à un connecteur correspondant dudit dispositif électronique (55).

11. Carte d'interface (1') selon la revendication 10, **caractérisée en ce que** ledit moyen (4') permettant de recevoir un signal de télévision numérique et ledit moyen (2') permettant de recevoir et de transmettre des données selon un protocole de données 2G ou de type supérieur sont connectés l'uns à l'autre par un connecteur de type FPC.

12. Carte d'interface (1') selon les revendications 4 et 6, **caractérisée en ce que** lesdites antennes (3', 7') sont disposées à une distance (d) telle que des interférences mutuelles soient évitées.

13. Carte d'interface (1') selon la revendication 12, **caractérisée en ce que** ladite distance (d) est au moins de 4 mm.

14. Carte d'interface (1') selon la revendication 1, **caractérisée en ce que** ledit moyen (4') permettant de recevoir un signal de télévision numérique et ledit moyen (2') permettant de recevoir et de transmettre des données selon un protocole de données 2G ou de type supérieur sont séparés par une structure centrale (61) et sont protégés par un couvercle de dessus (67) et un couvercle de dessous (69).
